# EUROPEAN PATENT APPLICATION

(11) **EP 4 141 825 A1**
(43) Date of publication of application: **01.03.2023**
(21) Application number: 21193831.1
(22) Date of filing: 30.08.2021
(51) Int. Cl.: G07C 9/00, G07B 15/00, B60R 25/25

(54) **A METHOD FOR ALLOWING ACCESS TO A VEHICLE AND A FLEET OF VEHICLES**

(71) Applicant: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: TRAN NGUYEN, Johnny, 42134 GÖTEBORG (SE); LINDBERG NILSSON, Erik, 417 47 GÖTEBORG (SE); SETTERBERG, Johan, 416 79 GÖTEBORG (SE); JOHANSSON, Jonathan, 41714 GÖTEBORG (SE); HENRIKSSON, Ted, 43160 MÖLNDAL (SE); BERLIN, Jimmy, 45592 MUNKEDAL (SE)
(74) Representative: Zacco Sweden AB

(57) **Abstract**

The disclosure relates to a method for allowing access to a vehicle (1), wherein the vehicle comprises a key access management (2) system in communication with a remote key access database (4); and at least one sensor for reading a static identifier (5-14); wherein the remote key access database (4) comprises identification information of static identifiers and a user profile associated with each static identifier, the method comprising: receiving (S1) identification information for at least one static identifier and the associated user profile from the remote key access database (4); storing (S2) the received identification information of the static identifier and the associated user profile in the key access management system (2) of the vehicle (1); reading (S3) identification information of a static identifier by the at least one sensor (5-14); comparing (S4) the read identification information with identification information in the key access management system (2); in response to finding a match of the read identification information in the key access management system (2), providing (S5) access to at least part of the vehicle. The disclosure further relates to a fleet of vehicles (30).

## Description

### Technical field

The present disclosure relates to a method for allowing access to a vehicle and a fleet of vehicles. More specifically, the disclosure relates to a method for allowing access to a vehicle and a fleet of vehicles as defined in the introductory parts of the independent claims.

### Background art

Keys for vehicles are crucial to be able to avoid theft of the vehicle or any items or equipment present in the vehicle. In modern society where vehicles more often are shared by multiple people, e.g. in time sharing setups or for rental vehicles, keys have to be distributed to a user before that user can access and use the vehicle. This can in many situations be cumbersome.

There is thus a need in the industry for improved solutions for handling of keys for vehicles.

### Summary

It is an object of the present disclosure to mitigate, alleviate or eliminate one or more of the above-identified deficiencies and disadvantages in the prior art and solve at least the above mentioned problem. According to a first aspect there is provided a method for allowing access to a vehicle, wherein the vehicle comprises a key access management system in communication with a remote key access database; and at least one sensor for reading a static identifier. The remote key access database comprises identification information of static identifiers and a user profile associated with each static identifier. The method comprises receiving identification information for at least one static identifier and the associated user profile from the remote key access database; storing the received identification information of the static identifier and the associated user profile in the key access management system of the vehicle; reading identification information of a static identifier by the at least one sensor; comparing the read identification information with identification information in the key access management system. In response to finding a match of the read identification information in the key access management system, the method provides access to at least part of the vehicle.

The problem of the prior art is thereby solved in that a generic static identifier known to the remote key access database and communicated to the vehicle's key access management system can be used to grant a user access to a vehicle or part of a vehicle. Multiple keys are thereby not a problem as the database can store identifications information about a vast number of static identifiers. Any existing static identifier can be used as key as long as it is stored in the remote key access database and communicated to the key access management system of the vehicle. A static identifier is a unique static property of an item or a person that cannot be changed. The identification information for such a static identifier is stored in the vehicle key access management system.

Another benefit is that the static identifier can be added to a vehicle and used for objects, e.g. a service drone, that can transmit information but that cannot receive new information.

The remote key access database is a remote database containing identification information of static identifiers and a user profile associated with each static identifier. The remote key access database is remotely placed and in communication with the vehicle via wired or wireless network, whatever is available. Wireless network could be wifi or telecom data traffic. Wired connection could be available e.g. when refueling/recharging the vehicle. In some situations no communication will be available. The vehicle will then rely on the information stored in the key access management system locally present in the vehicle.

According to some embodiments, the vehicle comprises multiple sensors for reading static identifiers and the user profile associated with each static identifier comprises information about which vehicle sensor or vehicle sensors that correspond to the static identifier. An advantage of this embodiment is that different sensors can be allowed to be used for different users dependent on the type of static identifier the user uses. Also, the location on the vehicle of the sensor used can be determined for a static identifier.

According to some embodiments, the user profile comprises access information for which doors of the vehicle the static identifier is allowed access to. The user can thereby be allowed to access only parts of the vehicle or only enter through certain doors. In combination with assigning a vehicle sensor for reading the static identifier that is close to the parts of the vehicle doors that the user has access to the user can more convenient enter the vehicle and avoid moving around the vehicle to access a sensor. This is also a safety feature when being located in traffic. Embarking a taxi may e.g. only be possible on the side of the sidewalk to keep the user walking on the road and being exposed to possible hazardous traffic situations.

According to some embodiments, the user profile comprises access information for which of a subset of a plurality of vehicle functions of the vehicle that the static identifier is allowed access to. The user can then be allowed to use only certain systems or functions, e.g. according to a leasing agreement or according to a rental agreement. The vehicle may thus have functions that the user is not allowed access to. The functions available in the vehicle does thus not limit what the user has access to. Instead the access level defined in the user profile limit the what the user has access to.

According to some embodiments, the user profile received from the key access database includes an expiration timestamp for the associated static identifier. The key may then be made to expire at a certain point in time without the need of being in contact with the remote key access database.

According to some embodiments, the user profile received from the key access database includes an activation timestamp for the associated static identifier. The key can then be made to start working at a certain point in time without the need of being in contact with the remote key access database.

According to some embodiments, the user profile comprises access information for allowing access to the vehicle doors and the subset of a plurality of vehicle functions at a defined geographical area and/or operation up to maximal speed. This can stop the use of a vehicle if it is placed in a restricted area or e.g. if the vehicle is in a service area where only service personnel is permitted to have access to the vehicle. It could also be used to restrict the vehicle to drive away from an area of a valet parking. The speed could also be limited for service personnel or valet parking personnel for work safety reasons or peace of mind for the owner.

According to some embodiments, the method comprises dynamically updating the user profile associated with a static identifier in the key access management system of the vehicle whenever changes are made in the remote key access database. In that way the key access database of the vehicle can be dynamically changed. Access can also be changed also when the vehicle is driving as long as it has a connection to the remote key access database.

According to some embodiments, the method comprises receiving instructions from the remote key access database to remove a specific static identifier from the key access management system of the vehicle so as to revoke access to the vehicle for the specific static identifier.

According to some embodiments, the static identifier is a uniquely identifiable NFC chip, a uniquely identifiable key card, a uniquely identifiable smartphone, a uniquely identifiable electronic device, a face of a person, an eye of a person, a fingerprint of a person, a voice of a person. Basically any uniquely identifiable object or personal biometric characteristic can be used as a key presenting an elegant solution to the problems of the prior art discussed in the background section.

According to some embodiments, the identification information corresponds to the type of static identifier: card number, NFC identification number, mac network ID, biometric face recognition data, biometric eye recognition data, biometric fingerprint data, and biometric voice recognition data, respectively.

According to some embodiments, the vehicle sensors are comprised in the group consisting of a NFC reader, an IR scanner, a camera, a short range wireless communication device, a fingerprint reader, an eye scanner, a data input/output connector. The static identifier that is allowed to use for a vehicle must match a sensor that is available on the vehicle and that is able to read that specific static identifier.

Different users can have completely different static identifiers. One user can e.g. have a chip operated into a hand, while another user uses an NFC chip present in a mobile phone.

According to some embodiments, a plurality of sensors and a corresponding plurality of static identifiers are required for allowing access to a vehicle. In that way a higher security for accessing the vehicle can be achieved. It could be that a physical static identifier as an NFC device and a biometric static identifier as a face or fingerprint are need for accessing the vehicle to increase security. Identical twins with identical biometric data can thereby be stopped from using the same personal biometric static identifier.

According to a second aspect there is provided a fleet of vehicles comprising a plurality of vehicles, wherein each vehicle comprises a key access management system in communication with a remote key access database and at least one sensor for reading a static identifier. Access to each vehicle is allowed according to the method of the first aspect, wherein a first static identifier is allowed access to a plurality of vehicles in the fleet of vehicles. A single static identifier can thereby be used for more than one vehicle, which simplifies for the user that now does not have to have one key per vehicle. Thus one static identifier can be used for multiple vehicles instead of having multiple keys as in the prior art.

According to some embodiments, the first static identifier is associated with a unique user profile for each vehicle, so that the first static identifier has different access at different vehicles. Agreement between the user and a vehicle owner can then be different for different vehicles while still using the same static identifier for accessing the vehicle.

According to some embodiments the same static identifier has different access in the same vehicle based on the current time or the location of the vehicle. It could e.g. be a person who works in a work shop doing service on his/her otherwise personal vehicle or a vehicle that the person regularly rents. It could also be that door are kept locked when driving in areas where it is not allowed to leave the vehicle, e.g. military areas or areas where crime rates are high.

Effects and features of the second aspect are to a large extent analogous to those described above in connection with the first aspect. Embodiments mentioned in relation to the first aspect are largely compatible with the second aspect.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 shows a schematic image of a vehicle according to an embodiment of the present disclosure.
Figure 2 shows a fleet of vehicles of the type disclosed in Figure 1.
Figure 3 shows a flow chart representing the method according to the invention.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

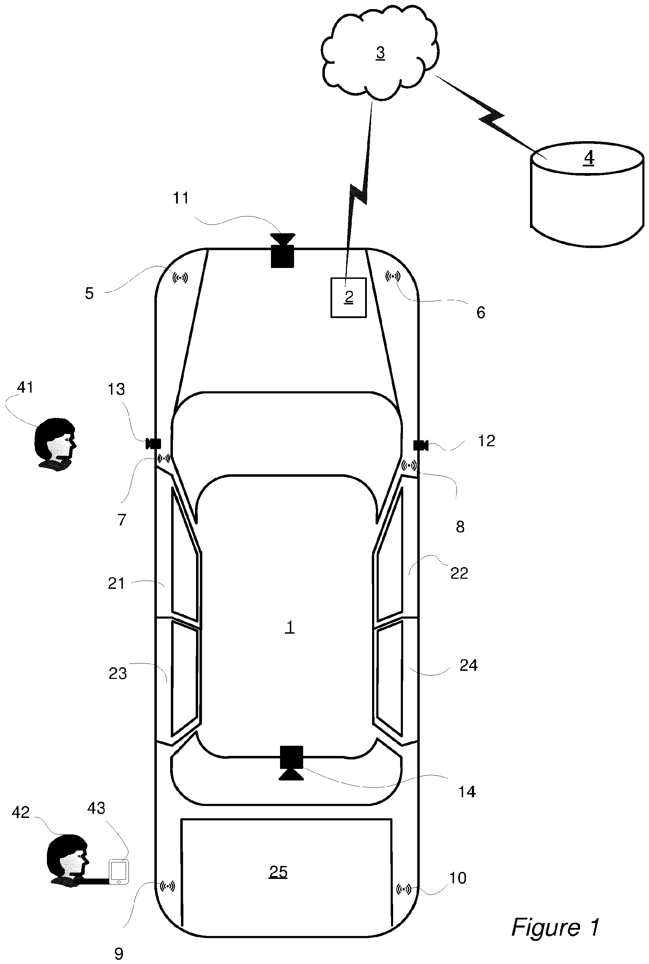

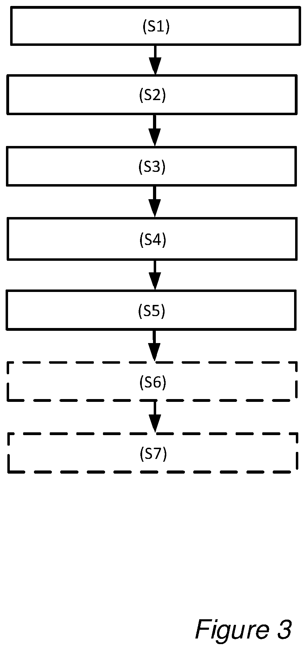

With reference to Figure 1 and Figure 3 the first aspect of this disclosure shows a method for allowing access to a vehicle 1, wherein the vehicle comprises a key access management 2 system in communication with a remote key access database 4. In Figure 1 the communication between the key access management 2 system of the vehicle 1 and the remote key access database 4 is wireless via a network or cloud 3. The vehicle further comprises at least one sensor for reading a static identifier 5-14. The remote key access database 4 comprises identification information of static identifiers and a user profile associated with each static identifier. The method comprises receiving S1 identification information for at least one static identifier and the associated user profile from the remote key access database 4; storing S2 the received identification information of the static identifier and the associated user profile in the key access management system 2 of the vehicle 1; reading S3 identification information of a static identifier by the at least one sensor 5-14; comparing S4 the read identification information with identification information in the key access management system 2; in response to finding a match of the read identification information in the key access management system 2, providing S5 access to at least part of the vehicle. Multiple keys are thereby easy to handle as the database can store identifications information about a vast number of static identifiers. Multiple users can then have access to a vehicle at the same time, which would be hard if normal keys were used as in the prior art, at least if more than a hand-full of users are involved.

The remote key access database 4 is remotely placed and in communication with the vehicle 1 via wired or wireless network, whatever is available. Wireless network could be wifi or telecommunication data traffic. Wired connection could be available e.g. when refueling/recharging the vehicle. In some situations no communication will be available. The vehicle will then rely on the information stored in the key access management system that is locally present in the vehicle and contains identification information a user profile associated with specific static identifiers that has been received at an earlier pint in time from the remote key access database.

The vehicle 1 of Figure 1 comprises multiple sensors 5-14 for reading static identifiers and the user profile associated with each static identifier comprises information about which vehicle sensor or vehicle sensors that correspond to the static identifier. Different sensors can be allowed to be used for a different users dependent on the type of static identifier the user uses. Also the location on the vehicle of the sensor used can be determined for a static identifier. The user profile comprises access information for which doors 21-25 of the vehicle 1 the static identifier is allowed access to. The user can thereby be allowed to access only parts of the vehicle or only enter through certain doors. In combination with assigning a vehicle sensor for reading the static identifier that is close to the parts of the vehicle doors that the user has access to the user can more convenient enter the vehicle and avoid moving around the vehicle to access a sensor. This is also a safety feature when being located in traffic. The user 42 in Figure 1 may e.g. have access only to the trunk 25 of the vehicle 1 via only the rear sensors 9 and 10 of the vehicle. The user 42 may e.g. be delivering something to the vehicle. The user 41 of Figure 1 may at the same time have full access to all doors 21-25 of the vehicle to be able to use it fully. If a user has access only to one door in a shared taxi, e.g. a sensor close to that door can is used for access. Compartments and d functions in side the vehicle associated with the seat where the user is booked can thereby be unlocked to that user in accordance with the user profile.

The user profile of user 41 comprises access information for which of a subset of a plurality of vehicle functions of the vehicle that the static identifier is allowed access to. The user can then be allowed to use only certain systems or functions, e.g. according to a leasing agreement or according to a rental agreement. If paying a budget price for renting the vehicle, the user 41 may e.g. not have access to the infotainment system of the vehicle or automatic speed control functions etc. The user profile received from the key access database may include an expiration timestamp for the associated static identifier. The user profile received from the key access database may further include an activation timestamp for the associated static identifier. In that way the vehicle may give the user access during a limited time also without further communication with the remote access database. The vehicle may thus have functions that the user is not allowed access to. The functions available in the vehicle does thus not limit what the user has access to. Instead the access level defined in the user profile limit the what the user has access to.

The functionality for the user can be dynamically updated while driving. E.g. if a user has not access to the full power range of the engine, the user can buy that access for a limited time. Or if the user is running out of battery allowed to use in accordance with the user's user profile, the user could purchase extra battery access during a time limited time (it could be a one time occurrence).

The user profile comprises access information for allowing access to the vehicle doors and the subset of a plurality of vehicle functions at a defined geographical area and/or operation up to maximal speed. This can stop the use of a vehicle if it is placed in a restricted area or e.g. if the vehicle is in a service area where only service personnel is permitted to have access to the vehicle. It could also be used to restrict the vehicle to drive away from an area of a valet parking or if a vehicles is about to leave the country via border or ferry. The speed could also be limited for service personnel or valet parking personnel or to limit speed in a rental company parking zones etc. Speed limitation may also be important if the user is a service robot that is only allowed to charge the vehicle at stand still.

Referring to Figure 3 the method may further comprise dynamically updating S6 the user profile associated with a static identifier in the key access management system of the vehicle whenever changes are made in the remote key access database. Access can be changed also when the vehicle is driving as long as it has a connection to the remote key access database. In that way new users can be allowed access to the vehicle. An example could be a renal situation. When a user has entered a rental agreement for a vehicle, the identification information of the static identifier chosen for accessing the vehicle is downloaded to the vehicle to allow access to doors and functions in the vehicle in accordance with the rental agreement.

The method may further comprise receiving S7 instructions from the remote key access database 4 to remove a specific static identifier from the key access management system 2 of the vehicle 1 so as to revoke access to the vehicle 1 for the specific static identifier. In Figure 1 the user 42 may e.g. be given access by to the trunk by dynamically updating the key access management system as the user 41 has ordered an item from an online store to be delivered to the trunk of the vehicle. The user 42 may then e.g. be given access to the trunk 25 only during a limited time window.

The static identifier is a uniquely identifiable NFC chip, a uniquely identifiable key card, a smartphone, a uniquely identifiable electronic device, a face of a person, an eye of a person, a fingerprint of a person, a voice of a person. The identification information corresponds to the type of static identifier: NFC identification number, card number, mac network ID, biometric face recognition data, biometric eye recognition data, biometric fingerprint data, and biometric voice recognition data, respectively. Basically any uniquely identifiable object or personal biometric characteristic can be used a as a key presenting an elegant solution to the problems of the prior art discussed in the background section. An advantage with using biometric data as a face, iris or fingerprint is that it is not possible to change, adding a high level of certainty that the user really is the one associated with the user profile in the key access management system. The vehicle sensors may e.g. be a NFC reader 5-10, an IR scanner, a camera 11-14, a short range wireless communication device 5-10, a fingerprint reader, an eye scanner, a data input/output connector, microphone. A plurality of sensors and a corresponding plurality of static identifiers may in some cases be required for allowing access to a vehicle. The static identifier that is allowed to use for a vehicle must match a sensor that is available on the vehicle and that is able to read that specific static identifier.

In Figure 1, e.g. the user 42 uses a mobile phone to access the vehicle. The static identifier may then be a uniquely identifiable NFC chip of the mobile phone 43, an application containing a downloaded key or any static identification information available in the mobile phone. The user 42 may then hold the mobile phone 43 close to the wireless sensor 9 or 10 to access the trunk 25. The user 41 instead presents a face to the camera 12 or 13 to unlock either the closest door or all doors, dependent on what is stored in the user profile of the user 41.

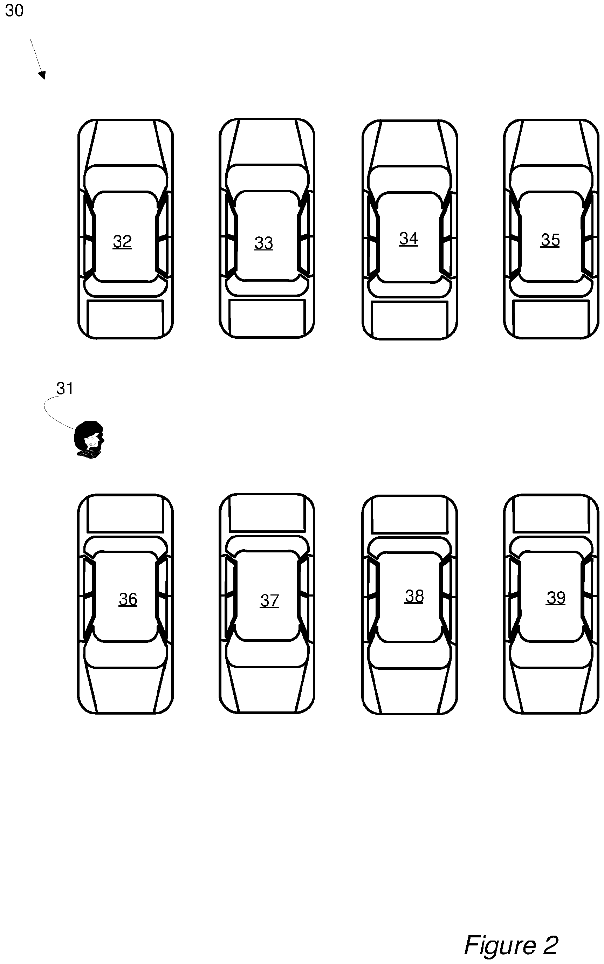

The second aspect of this disclosed in Figure 2 discloses a fleet 30 of vehicles comprising a plurality of vehicles 32-39, wherein each vehicle is of the type of vehicle 1 disclosed in Figure 1, each comprising a key access management system in communication with a remote key access database and at least one sensor for reading a static identifier. Access to each vehicle 32-39 is allowed according to the method of the first aspect described above. A single static identifier can thereby be used for more than one vehicle, which simplifies for the user that now does not have to have one key per vehicle. Thus one static identifier can be used for multiple vehicles instead of having multiple keys as in the prior art. An example could be a renal situation. When a user has entered a rental agreement for a vehicle, the static identifier chosen for accessing the vehicle is downloaded to multiple or all vehicles of the fleet. The user is then allowed access to doors and functions in the vehicle in accordance with the rental agreement for all vehicles that has received the identification information of the chosen static identifier. A first static identifier, e.g. the face of user 31, may be allowed access to only one or a plurality of vehicles 32-39 in the fleet of vehicles 31. The first static identifier may further be associated with a unique user profile for each vehicle 32-39, so that the first static identifier and thereby the user 31 has different access at different vehicles. Agreement between the user and a vehicle owner can then be different for different vehicles while still using the same static identifier for accessing the vehicle.

The same static identifier has different access in the same vehicle based on the current time or the location of the vehicle. It could e.g. be a person who works in a work shop doing service on his/her otherwise personal vehicle or a vehicle that the person regularly rents. It could be a user that cleans taxi vehicle but also works as a taxi driver for the same vehicle. It could also be that door are kept locked when driving in areas where it is not allowed to leave the vehicle, e.g. military areas or areas where crime rates are high.

A static identifier may have multiple user accounts connected to the same key. E.g. in the example above when a user works with cleaning taxis, but also works with driving the same vehicle as taxi, two different user accounts can be associated with the static identifier that the user uses. The user profiles can then restrict/allow access in accordance with each employers which based on date, time and location.

The person skilled in the art realizes that the present disclosure is not limited to the preferred embodiments described above. The person skilled in the art further realizes that modifications and variations are possible within the scope of the appended claims. For example, the type of static identifiers could be extended with any unique property of a person or item. Additionally, variations to the disclosed embodiments can be understood and effected by the skilled person in practicing the claimed disclosure, from a study of the drawings, the disclosure, and the appended claims.

## Claims

1. A method for allowing access to a vehicle (1), wherein the vehicle comprises
a key access management (2) system in communication with a remote key access database (4); and
at least one sensor for reading a static identifier (5-14);
wherein the remote key access database (4) comprises identification information of static identifiers and a user profile associated with each static identifier, the method comprising:
receiving (S1) identification information for at least one static identifier and the associated user profile from the key access database (4);
storing (S2) the received identification information of the static identifier and the associated user profile in the key access management system (2) of the vehicle (1);
reading (S3) identification information of a static identifier by the at least one sensor (5-14);
comparing (S4) the read identification information with identification information in the key access management system (2);
in response to finding a match of the read identification information in the key access management system (2), providing (S5) access to at least part of the vehicle.

2. The method according to claim 1, wherein the vehicle comprises multiple sensors (5-14) for reading static identifiers and the user profile associated with each static identifier comprises information about which vehicle sensor or vehicle sensors that correspond to the static identifier.

3. The method according to any one of the preceding claims, wherein the user profile comprises access information for which doors (21-25) of the vehicle (1) the static identifier is allowed access to.

4. The method according to any one of the preceding claims, wherein the user profile comprises access information for which of a subset of a plurality of vehicle functions of the vehicle that the static identifier is allowed access to.

5. The method according to any one of the preceding claims, wherein the user profile received from the key access database includes an expiration timestamp for the associated static identifier.

6. The method according to any one of the preceding claims, wherein the user profile received from the key access database includes an activation timestamp for the associated static identifier.

7. The method according to any one of the preceding claims, wherein the user profile comprises access information for allowing access to the vehicle doors and the subset of a plurality of vehicle functions at a defined geographical area and/or operation up to maximal speed.

8. The method according to any one of the preceding claims, further comprising dynamically updating (S6) the user profile associated with a static identifier in the key access management system of the vehicle whenever changes are made in the remote key access database.

9. The method according to any one of the preceding claims, further comprising receiving instructions (S7) from the remote key access database (4) to remove a specific static identifier from the key access management system (2) of the vehicle (1) so as to revoke access to the vehicle (1) for the specific static identifier.

10. The method according to any one of the preceding claims, wherein the static identifier is a uniquely identifiableNFC chip, a uniquely identifiable key card, a uniquely identifiable smartphone, a uniquely identifiable electronic device, a face of a person, an eye of a person, a fingerprint of a person, a voice of a person.

11. The method according to claim 10, wherein the identification information corresponds to the type of static identifier: card number, NFC identification number, mac network ID, biometric face recognition data, biometric eye recognition data, biometric fingerprint data, and biometric voice recognition data, respectively.

12. The method according to any one of the preceding claims, wherein the vehicle sensors are comprised in the group consisting of a NFC reader (5-10), an IR scanner, a camera (11-14), a short range wireless communication device (5-10), a fingerprint reader, an eye scanner, a data input/output connector, microphone.

13. The method according to any one of the preceding claims, wherein a plurality of sensors and a corresponding plurality of static identifiers are required for allowing access to a vehicle.

14. A fleet of vehicles (30) comprising a plurality of vehicles (32-39), wherein each vehicle comprises
a key access management system in communication with a remote key access database; and
at least one sensor for reading a static identifier;
wherein access to each vehicle is allowed according to the method of any one of claims 1-13; and
wherein a first static identifier is allowed access to a plurality of vehicles in the fleet of vehicles.

15. The fleet of vehicles according to claim 14, wherein the first static identifier is associated with a unique user profile for each vehicle, so that the first static identifier has different access at different vehicles.
